(19) Europäisches Patentamt

European Patent Office

Office européen des brevets

(11) Veröffentlichungsnummer: **0 001 057
B1**

(12) **EUROPÄISCHE PATENTSCHRIFT**

(45) Veröffentlichungstag der Patentschrift:
**20.05.81**

(21) Anmeldenummer: **78100667.1**

(22) Anmeldetag: **16.08.78**

(51) Int. Cl.³: **C 08 G 18/66,** C 08 G 18/32

(54) Verfahren zur Verbesserung der Vergilbungsbeständigkeit von Polyurethanen.

(30) Priorität **26.08.77 US 828121**

④③ Veröffentlichungstag der Anmeldung
**21.03.79 Patentblatt 79/6**

(45) Bekanntmachung des Hinweises auf die Patenterteilung:
**20.05.81 Patentblatt 81/20**

(84) Benannte Vertragsstaaten:
**DE FR GB**

(56) Entgegenhaltungen:
**DE-B-1 301 122
DE-B-1 645 040**

(73) Patentinhaber **Mobay Chemical Corporation, Penn
Lincoln Parkway West, Pittsburgh,
Pennsylvania 15205 (US)**

(72) Erfinder: **Heiss, Herbert L., R.D.No.1, Box 71, New
Martinsville West Virginia 26155 (US)**

(74) Vertreter: **Müller, Heinz-Gerd, Dipl.-Ing. et al, c/o Bayer
AG Zentralbereich Patente Marken und Lizenzen,
D-5090 Leverkusen 1, Bayerwerk (DE)**

Verfahren zur Verbesserung der Vergilbungsbeständigkeit von Polyurethanen

Die vorliegende Erfindung betrifft ein neuartiges Verfahren zur Verbesserung der Beständigkeit von thermoplastischen Polyurethanen gegenüber Verfärbung, indem man relativ kleine Mengen spezieller Hydroxylgruppen aufweisender Verbindungen bei der Herstellung des thermoplastischen Polyurethans mitverwendet. Die erfindungsgemäß zu verwendenden Additive können dabei vor oder während der Polyadditionsreaktion dem Reaktionsgemisch zugesetzt werden.

Da sich thermoplastische Polyurethane auf Basis von Polyesterpolyolen und aromatischen Polyisocyanaten bekanntlich im Laufe der Zeit verfärben, wurden bisher nur geringe Anstrengungen unternommen, um Produkte herzustellen, welche von vornherein nur eine geringe Verfärbung aufweisen. In jüngster Zeit entstand jedoch ein Bedarf nach farblosen, transparenten Polyurethanen, beispielsweise für die Herstellung der Räder von Skate boards. Von besonderem Interesse war in diesem Zusammenhang das Auftreten von Verfärbungen während der Verarbeitung des Polyurethans unter dem Einfluß der beim Extrudieren, Spritzgießen oder Trocknen auftretenden hohen Verarbeitungstemperaturen. Die Vergilbung des Polymeren ist in diesem Fall offensichtlich mit keiner merklichen Beeinträchtigung der mechanischen Eigenschaften verbunden und daher völlig verschieden von jener Verfärbungsreaktion, welche während des Gebrauchs des Fertigprodukts in Folge von Witterungseinflüssen auftritt. Als störend erwies sich bei dem erstgenannten Typ von Verbilgung insbesondere die Verfärbung des Polyurethans während der Extrusion zu Granulaten, da der Verarbeiter von Charge zu Charge unterschiedlich gefärbte Produkte erhielt. Darüber hinaus erwiesen sich manche Chargen als besonders empfindlich gegenüber Verfärbungsreaktionen während des Spritzgießens oder Trocknens des Polyurethans durch den Endverarbeiter, so daß Fertigprodukte mit völlig unterschiedlichen Farbtönen erhalten wurden.

Es wurde gefunden, daß das geschilderte Problem von Verfärbungsreaktionen während der Verarbeitung des thermoplastischen Polyurethans insbesondere dann auftritt, wenn Polyurethane eingesetzt werden, welche aus aromatischen Polyisocyanaten und solchen Polyesterpolyolen und Kettenverlängerungsmitteln aufgebaut sind, deren Diolkomponente aus Butandiol oder höheren Glykolen besteht.

Es wurde nunmehr überraschenderweise gefunden, daß die oben geschilderten Verfärbungsreaktionen beim Erhitzen des thermoplastischen Polyurethans vermieden werden können, wenn beim Aufbau des Polyurethans zwischen 0,05 und 2 Gew.-%, bezogen auf Gesamtgewicht des thermoplastischen Polyurethans, einer Hydroxylgruppen aufweisenden Verbindung mitverwendet werden, wobei dieses Additiv ein Molekulargewicht unterhalb von 400 aufweisen und 2 bis 4 aliphatische Hydroxylgruppen enthalten soll, von denen mindestens 2 primär und/oder sekundär sein und sich in vicinaler Stellung zueinander befinden sollen.

Selbstverständlich können derartige Additive prinzpiell bei der Herstellung beliebiger thermoplastischer Polyurethane mitverwendet werden; von Vorteil sind sie jedoch nur in solchen Fällen, in welchen das Hydroxylgruppen aufweisende Additiv nicht ohnehin bereits als Kettenverlängerungsmittel oder z. B. als Verunreinigung im Polyester vorhanden ist. Die vorliegende Erfindung ist daher auf solche Polyurethanformulierungen beschränkt, welche kein Polyol der oben beschriebenen Art enthalten, da gefunden wurde, daß die Gegenwart eines solchen Polyols mit mindestens zwei vicinalen primären und/oder sekundären Hydroxylgruppen — sowohl in der Polyesterkomponente (z. B. in Form von Polyäthylenadipat) als auch im Kettenverlängerer — ausreichend ist, um das oben geschilderte Problem der Vergilbung zu vermeiden.

Gegenstand der vorliegenden Erfindung ist somit ein Verfahren zur Verbesserung der Verfärbungsbeständigkeit von thermoplastischen Polyurethanen, welche aus a) einem aromatischen Polyisocyanat, b) einem Polyesterpolyol und c) einem aktive Wasserstoffatome enthaltenden Kettenverlängerungsmittel aufgebaut sind, wobei weder die Komponente b) noch die Komponente c) von vornherein ein Polyol mit vicinalen Hydroxylgruppen enthält, welches dadurch gekennzeichnet ist, daß man bei der Herstellung des Polyurethans 0,05 bis 2 Gew.-%, bezogen auf Gesamtgewicht des Polyurethans, eines 2 bis 4 aliphatische Hydroxylgruppen aufweisenden Additivs mit einem Molekulargewicht unter 400 mitverwendet, welches mindestens 2 vicinale primäre und/oder sekundäre Hydroxylgruppen enthält.

Im erfindungsgemäßen Verfahren kann das Additiv sowohl zusammen mit dem Polyesterpolyol als auch zusammen mit dem Kettenverlängerungsmittel oder auch als getrennte Komponente vor oder während der Polyadditionsreaktion zugesetzt werden. Vorzugsweise soll das Reaktionsgemisch 0,1 bis 1,0 Gew.-%, besonders bevorzugt 0,2 bis 0,7 Gew.-%, des Additivs, bezogen auf Polyurethanfeststoff, enthalten. Diese Mengen liegen erheblich unter den üblicherweise bei Kettenverlängerungsmitteln angewandten Mengenverhältnissen.

Vorzugsweise soll das erfindungsgemäß mitzuverwendende Additiv nur 2 Hydroxylgruppen enthalten, welche beide primär sind. Verbindungen dieser Art sind beispielsweise Äthylenglykol, 1,2-Propandiol, 1,2-Butandiol, 2,3-Butandiol, 1,2-Cyclohexandiol, Glycerin, Glycerinmonoester, Glycerinmonoäther, Hexandiole mit vicinalen Hydroxylgruppen etc In der Praxis wird man aus der Vielzahl der in Frage kommenden Verbindungen solche auswählen, welche mit dem Reaktionsgemisch verträglich sind, in großtechnischen Mengen zur Verfügung stehen und die Transparenz des Fertigprodukts nicht beeinträchtigen. In den meisten Fällen wird beim erfindungsgemäßen Verfahren Äthylenglykol als Additiv eingesetzt, weil es schon bei sehr niedrigen Konzentrationen zu dem gewünschten Effekt führt.

Wie schon erwähnt, kann beim erfindungsgemäßen Verfahren das Additiv im Polyester oder im Kettenverlängerungsmittel bzw. Mischungen daraus aufgelöst sein oder in einem getrennten Strom dem Reaktionsgemisch zugesetzt werden. Wie gefunden wurde, führen alle diese verschiedenen möglichen Arbeitsweisen zu vergleichbaren Endprodukten.

bei der Herstellung des thermoplastischen Polyesterurethans können beliebige Polyesterpolyole eingesetzt werden, welche im allgemeinen ein Molekulargewicht zwischen 400 und 10 000, vorzugsweise zwischen 700 und 5 000, besonders bevorzugt zwischen 1 000 und 3 000, aufweisen und in an sich bekannter Weise aus Polycarbonsäuren und mehrwertigen Alkoholen hergestellt werden.

Geeignete Polycarbonsäuren sind beispielsweise Benzoltricarbonsäure, Adipinsäure, Bernsteinsäure, Korksäure, Sebazinsäure, Oxalsäure, Methyladipinsäure, Glutarsäure, Pimelinsäure, Azelainsäure, Phthalsäure, Terephthalsäure, Isophthalsäure, Thiodipropionsäure, Maleinsäure, Fumarsäure, Itaconsäure usw. Als Alkoholkomponente des Polyesterpolyols kommen solche mehrwertigen, vorzugsweise zweiwertigen, Alkohole in Frage, welche keine vicinalen Hydroxylgruppen aufweisen, wie z. B. 1,3-Propylenglykol, 1,4-Butandiol, 1,3-Butandiol, 1,5-Pentandiol, 1,6-Hexandiol, Bis-(hydroxymethylcyclohexan), Diäthylenglykol, 2,2-Dimethylpropylenglykol, 1,3,6-Hexantriol, Trimethylolpropan, Pentaerythrit, Sorbit etc. Geeignet sind auch Polyester auf Basis von Lactonen und Hydroxycarbonsäuren.

Auch amidgruppenhaltige Polyesterpolyole können erfindungsgemäß eingesetzt werden. Solche Polyesteramide werden erhalten, wenn bei der Veresterungsreaktion zwischen Carbonsäure und Alkohol ein Amin, ein Aminoalkohol oder eine Aminocarbonsäure mitverwendet werden. Geeignete derartige Verbindungen sind beispielsweise Hexamethylendiamin, Äthylendiamin, Propylendiamin, Butylendiamin, Diaminocyclohexan, Phenylendiamin, Toluylendiamin, Xylylendiamin, 4,4'-Diaminodiphenylmethan, Naphthylendiamin, Äthanolamin, Propanolamin, Butanolamin, Aminobenzylalkohol, Aminoessigsäure, Aminopropionsäure, Aminobuttersäure, Aminovaleriansäure, Aminophthalsäure, Aminobenzoesäure etc.

Diese Aminoverbindungen können dabei entweder gleichzeitig mit den esterbildenden Komponenten oder in einem nachfolgenden Reaktionsschritt eingesetzt werden.

Bei der Herstellung des thermoplastischen Polyesterurethans können alle an sich bekannten aromatischen Polyisocyanate eingesetzt werden. Beispiele hierfür sind

    1,4-Phenylendiisocyanat,
    1,3-Phenylendiisocyanat,
    2,4-Toluylendiisocyanat,
    2,6-Toluylendiisocyanat,
    3,5-Toluylendiisocyanat,
    4-Chlor-1,3-phenylendiisocyanat,
    1-Methoxy-2,4-phenylendiisocyanat,
    1-Methyl-3,5-diäthyl-2,6-phenylendiisocyanat,
    1,3,5-Triäthyl-2,4-phenylendiisocyanat,
    1-Methyl-3,5-diäthyl-2,4-phenylendiisocyanat,
    1-Methyl-3,5-diäthyl-6-chlor-2,4-phenylendiisocyanat,
    6-Methyl-2,4-diäthyl-5-nitro-1,3-phenylendiisocyanat,
    p-Xylylendiisocyanat,
    m-Xylylendiisocyanat,
    4,6-Dimethyl-1,3-xylylendiisocyanat,
    1,3-Dimethyl-4,6-bis($\beta$-isocyanatoäthyl)-benzol,
    3-($\alpha$-Isocyanatoäthyl)-phenylisocyanat,
    4,4'-Diphenyldiisocyanat,
    3,3'-Dimethyl-4,4'-diphenyldiisocyanat,
    3,3'-Dimethoxy-4,4'-diphenyldiisocyanat,
    3,3'-Diäthoxy-4,4'-diphenyldiisocyanat,
    1,1'-Bis-(4-isocyanatophenyl)-cyclohexan,
    4,4'- und 2,4'-Diisocyanatodiphenylmethan,
    4,4'-Diisocyanato-3,3'-dimethyldiphenylmethan,
    4,4'-Diisocyanato-3,3'-dichlordiphenylmethan,
    4,4'-Diisocyanato-diphenyl-dimethylmethan,
    1,5-Naphthylendiisocyanat,
    1,4-Naphthylendiisocyanat,
    2,4,4'-Triisocyanato-diphenyläther,
    2,4,6-Triisocyanato-1-methyl-3,5-diäthylbenzol etc.

Erfindungsgemäß geeignete Kettenverlängerungsmittel sind solche mit einem Molekulargewicht unter ca. 400, welche keine vicinalen primären und/oder sekundären Hydroxylgruppen aufweisen. Es sind dies die aus der Polyurethanchemie als Kettenverlängerungsmittel an sich bekannten Polyole, Polyamine, Hydrazine und Hydrazide. Beispiele für erfindungsgemäß geeignete Kettenverlängerungsmittel sind Wasser, 1,3-Propylenglykol, 1,3-Butandiol, 1,4-Butandiol, Butendiol, Butindiol, Xylylenglykol, 1,5-Pentandiol, Neopentylglykol, 1,4-Phenylen-bis-($\beta$-hydroxyäthyl)-äther, 1,3-Phenylen-bis-($\beta$-hydroxyäthyl)-äther, Bis-(Hydroxymethyl)-cyclohexan, 1,6-Hexandiol, Diäthylenglykol, Dipropylenglykol; Polyamine wie Äthylendiamin, Propylendiamin, Butylendiamin, Hexamethylendiamin, Diaminocyclohexan, Phenylendiamin, Toluylendiamin, Xylylendiamin, 3,3'-Dichlorbenzidin, 3,3'-Dinitrobenzidin, 4,4'-Methylen-bis(2-chloranilin), 3,3'-Dichlor-4,4'-diphenyldiamin, 2,6-Diaminopyridin, 4,4'-Diaminodiphenylmethan; Hydrazin, substituierte Hydrazine wie N,N'-Dimethylhydrazin, 1,6-Hexamethylen-bis-hydrazin, Carbodihydrazid, Hydrazide von Dicarbonsäuren und Disulfonsäuren wie Adipinsäuredihydrazid, Oxalsäuredihydrazid, Isophthalsäuredihydrazid, Thiodipropionsäuredihydrazid, Weinsäuredihydrazid, 1,3-Phenylen-disulfonsäuredihydrazid, $\omega$-Aminocapronsäurehydrazid, $\gamma$-Hydroxybuttersäurehydrazid, Bis-Semicarbazid, Bis-Hydrazincarbonsäureester von Glykolen etc.

Die folgenden Beispiele dienen zur Erläuterung des erfindungsgemäßen Verfahrens. Wenn nicht anders vermerkt, sind Mengenangaben als Gewichtsteile bzw. Gewichtsprozente zu verstehen.

## Beispiele 1 bis 12

1000 Teile eines Polyesters aus 1,4-Butandiol und Adipinsäure mit einem Molekulargewicht von 2000 und einer Hydroxylzahl von 56 wurden mit 100 Teilen 1,4-Butandiol und 410 Teilen 4,4'-Diphenylmethandiisocyanat vermischt und das Reaktionsgemisch in einer Form 30 Minuten bei 110°C ausgeheizt. Das so erhaltene Polyurethan wurde granuliert und durch Spritzvergießen zu kleinen Platten geformt. Diese Platten wurden 16 Stunden lang unter Luftzutritt bei 110°C gelagert und danach auf ihre Verfärbung gemäß dem Yellow Index Test untersucht (ASTM-D-1925-63 T).

Die oben beschriebene Formulierung stellt den Kontrollversuch (ohne Additiv) dar und wurde deshalb ausgewählt, weil sie eine ausgeprägte Tendenz zur Vergilbung unter dem Einfluß erhöhter Temperatur zeigt. In den erfindungsgemäßen Beispielen, in welchen dem Reaktionsgemisch noch das Additiv zugesetzt wurde, wurde eine zum Additiv äquivalente Menge an 4,4'-Diphenylmethan-diisocyanat zusätzlich mitverwendet.

Menge und Art der untersuchten Additive sind der folgenden Tabelle zu entnehmen. Die Meßergebnisse sind ebenfalls in der Tabelle zusammengefaßt. Die Beispiele 7 und 12 stellen Vergleichsversuche dar, in welchen Hydroxylgruppen aufweisende Additive außerhalb der erfindungsgemäßen Definition eingesetzt wurden. Die in der Tabelle angegebenen Mengen des Additivs sind als Gewichtsprozent, bezogen auf Gesamtgewicht des Reaktionsgemisches, zu verstehen.

Tabelle

| Beispiel | Additiv | Prozent Additiv | Yellow Index |
|---|---|---|---|
| 1 | — | — | 37.7 |
| 2 | Äthylenglykol | 0.2 | 17.6 |
| 3 | Äthylenglykol | 1.0 | 10.8 |
| 4 | 1,2-Propandiol | 0.24 | 15.5 |
| 5 | 1,2-Butandiol | 0.29 | 13.4 |
| 6 | 2,3-Butandiol | 0.29 | 17.6 |
| 7 | Pinakol | 0.38 | 31.8 |
| 8 | 1,2-Cyclohexandiol | 0.37 | 22.3 |
| 9 | Glycerin | 0.30 | 17.6 |
| 10 | Glycerin-Monoölsäureester | 1.10 | 19.6 |
| 11 | Glycerin-Monoallyläther | 0.42 | 18.9 |
| 12 | Brenzkatechin | 0.35 | ≫40 |

4

**Patentansprüche**

1. Verfahren zur Verbesserung der Verfärbungsbeständigkeit von thermoplastischen Polyurethanen, welche aus

a) einem aromatischen Polyisocyanat,
b) einem Polyesterpolyol und
c) einem aktive Wasserstoffatome entahltenden Kettenverlängerungsmittel

aufgebaut sind, wobei weder die Komponente b) noch die Komponente c) von vornherein ein Polyol mit vicinalen Hydroxylgruppen enthält, dadurch gekennzeichnet, daß man bei der Herstellung des Polyurethans 0,05 bis 2 Gew.-%, bezogen auf Gesamtgewicht des Polyurethans, eines 2 bis 4 aliphatische Hydroxylgruppen aufweisenden Additivs mit einem Molekulargewicht unter 400 mitverwendet, welches mindestens 2 vicinale primäre und/oder sekundäre Hydroxylgruppen aufweist.

2. Verfahren nach Anspruch 1, dadurch gekennzeichnet, daß 0,1 bis 1 Gew.-% des Additivs mitverwendet werden.

3. Verfahren nach Anspruch 2, dadurch gekennzeichnet, daß 0,2 bis 0,7% des Additivs mitverwendet werden.

4. Verfahren nach Anspruch 1 bis 3, dadurch gekennzeichnet, daß das Additiv 2 primäre vicinale Hydroxylgruppen enthält.

5. Verfahren nach Anspruch 1 bis 4, dadurch gekennzeichnet, daß Äthylenglykol als Additiv verwendet wird.

**Claims**

1. Method of improving the colour stability of thermoplastic polyurethanes which are prepared from

a) an aromatic polyisocyanate,
b) a polyester polyol and
c) a chain extender containing active hydrogen atoms,

neither component b) nor component c) containing at the outset a polyol with vicinal hydroxyl groups, characterised in that in the preparation of the polyurethane 0.05 to 2% by weight, based on the total weight of the polyurethane, of an additive containing 2 to 4 aliphatic hydroxyl groups is used having a molecular weight of below 400, and containing at least 2 vicinal primary and/or secondary hydroxyl gropus.

2. Method according to claim 1, characterised in that 0.1 to 1% by weight of the additive are used.

3. Method according to claim 2, characterised in that 0.2 to 0.7% of the additive are used.

4. Method according to claim 1 to 3, characterised in that the additive contains 2 primary vicinal hydroxyl gropus.

5. Method according to claim 1 to 4, characterised in that ethylene glycol is used as the additive.

**Revendications**

1. Procédé pour améliorer la résistance au jaunissement des polyuréthannes thermoplastiques constitués de:

a) un polyisocyanate aromatique,
b) un polyester-polyol, et
c) un agent d'allongement des Chaînes contenant des atomes d'hydrogène actif,

étant précisé que ni le composant b) ni le composant c) ne contiennent à l'origine un polyol à groupes hydroxy vicinaux, ce procédé se caractérisant en ce que, à la préparation du polyuréthanne, on utilise conjointement de 0,05 à 2% en poids, par rapport au poids total du polyuréthanne, d'un additiv portant de 2 à 4 groupes hydroxy aliphatiques et présentant un poids moléculaire inférieur à 400, avec au moins 2 groupes hydroxy primaires et/ou secondaires vicinaux.

2. Procédé selon la revendication 1, caractérisé en ce que l'on utilise conjointement de 0,1 à 1% en poids de l'additif.

3. Procédé selon la revendication 2, caractérisé en ce que l'on utilise conjointement de 0,2 à 0,7% de l'additif.

4. Procédé selon les revendications 1 à 3, caractérisé en ce que l'additif contient deux groupes hydroxy primaires vicinaux.

5. Procédé selon les revendications 1 à 4, caractérisé en ce que l'on utilise l'éthylèneglycol en tant qu'additif.